# EUROPEAN PATENT APPLICATION

(11) **EP 1 188 777 A2**
(43) Date of publication of application: **20.03.2002**
(21) Application number: 01307944.7
(22) Date of filing: 18.09.2001
(51) Int. Cl.: C08F 255/02, C09J 151/06

(54) **Modified polyolefin and resin composition containing the same**

(30) Priority: 19.09.2000 JP 2000284153; 14.03.2001 JP 2001072987
(71) Applicant: Mitsui Chemicals, Inc., Tokyo 100-6070 (JP)
(72) Inventor: Ota, Seiji, Sodegaura-shi, Chiba (JP); Yoshii, Kouji, Sodegaura-shi, Chiba (JP)
(74) Representative: Cresswell, Thomas Anthony

(57) **Abstract**

A modified polyolefin which is the product of graft polymerizing a polyolefin (A) comprising repeating units derived from at least one olefin selected from ethylene and α-olefins of 3 to 20 carbon atoms, with at least one alicyclic epoxy group-containing ethylenically unsaturated monomer (B) having a specific structure, the modified polyolefin comprising 0.01 to 50% by weight of units derived from (B) based on the total weight of the modified polyolefin. The modified polyolefin has excellent adhesion properties to metals and polar resins and has excellent solvent resistance.

## Description

### FIELD OF THE INVENTION

The present invention relates to a novel graft modified polyolefin and a resin composition containing the same. More particularly, the invention relates to a modified polyolefin having excellent adhesion properties to polar resins and excellent solvent resistance, a thermoplastic resin composition containing the modified polyolefin and an adhesive resin composition containing the modified polyolefin.

### BACKGROUND OF THE INVENTION

Polyolefins generally are excellent in moldability, heat resistance, mechanical properties, hygienic qualities, water vapor permeation resistance and appearance of molded articles thereof, and hence they are broadly used for extrusion molded articles, blow molded articles and injection molded articles.

The polyolefins, however, are so-called non-polar resins having no polar group in the molecule, so that they are poor in affinity for metals and other various polar materials, and it is difficult to use them for laminates of the polar materials.

On this account, in order to improve the affinity of the polyolefins for the polar materials, a method of graft polymerization of the polyolefins with maleic anhydrides has been widely used. In the use of some adherends, however, the effects of the method are not satisfactory, and hence development of a modified polyolefin having higher adhesion force to the polar materials has been desired.

On the other hand, there is known a copolymer obtained by copolymerizing ethylene and a polar monomer such as methacrylic acid through radical polymerization under high pressure. In this case, however, a large number of long-chain branches are produced during the polymerization, and hence a highly crystalline copolymer is unobtainable. Therefore, the adhesion strength is sometimes extremely lowered when the resulting copolymer is applied to uses wherein the copolymer is brought into contact with a solvent such as gasoline or uses for containers to store food materials of high oil content.

### OBJECT OF THE INVENTION

The present invention is intended to solve such problems associated with the prior art as described above, and it is an object of the invention to provide a modified polyolefin having excellent adhesion properties to metals and polar resins and excellent solvent resistance. It is another object of the invention to provide an excellent thermoplastic resin composition and an excellent adhesive resin composition each of which comprises the modified polyolefin.

### SUMMARY OF THE INVENTION

The modified polyolefin of the invention is a modified polyolefin obtained by graft polymerizing a polyolefin (A) that is obtained by polymerization of at least one olefin selected from ethylene and α-olefins of 3 to 20 carbon atoms, with at least one alicyclic epoxy group-containing ethylenically unsaturated monomer (B) represented by any one of the following formulas (1) to (4) in a quantity of 0.01 to 50 % by weight with the proviso that the quantity of the modified polyolefin is 100 % by weight; 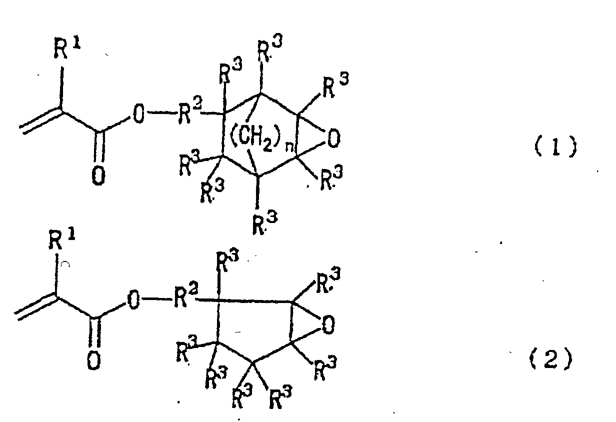 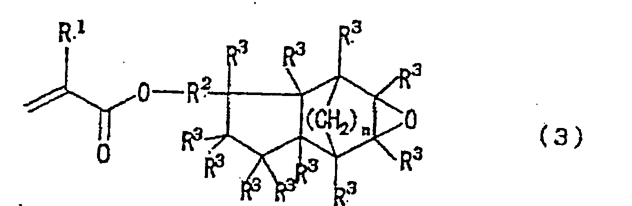 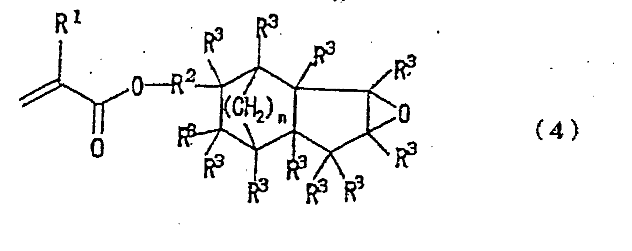 wherein R¹ is hydrogen or methyl, R² is a single bond or a divalent hydrocarbon group of 1 to 20 carbon atoms which may contain a hetero atom, R³ is hydrogen or a hydrocarbon group of 1 to 20 carbon atoms which may contain a hetero atom, n is an integer of 0 to 2, and each R³ may be the same or different.

The modified polyolefin of the invention may be a modified polyolefin obtained by graft polymerizing a polyolefin (A) that is obtained by polymerization of at least one olefin selected from ethylene and α-olefins of 3 to 20 carbon atoms, with at least one alicyclic epoxy group-containing ethylenically unsaturated monomer (B) represented by any one of the above-mentioned formulas (1) to (4) in a quantity of 0.01 to 50 % by weight and other ethylenically unsaturated monomer in a quantity of 0.01 to 50 % by weight, with the proviso that the quantity of the modified polyolefin is 100 % by weight and the total of the graft quantities of the monomer (B) and other ethylenically unsaturated monomer is in the range of 0.02 to 60 % by weight.

In the modified polyolefin of the invention, the polyolefin (A) is preferably an ethylene homopolymer or an ethylene copolymer, and is more preferably an ethylene homopolymer or an ethylene copolymer having a density of not less than 0.895 g/cc.

In the modified polyolefin of the invention, other ethylenically unsaturated monomer is preferably an aromatic vinyl compound.

The thermoplastic resin composition (E) of the invention is a composition comprising the above-mentioned modified polyolefin (C) and a thermoplastic resin (D), said modified polyolefin (C) being obtained by graft polymerizing a polyolefin (A) with at least one alicyclic epoxy group-containing ethylenically unsaturated monomer (B) represented by any one of the above-mentioned formulas (1) to (4).

The thermoplastic resin composition may be a composition comprising the above-mentioned modified polyolefin (C') and a thermoplastic resin (D), said modified polyolefin (C') being obtained by graft polymerizing a polyolefin (A) with at least one alicyclic epoxy group-containing ethylenically unsaturated monomer (B) represented by any one of the above-mentioned formulas (1) to (4) and other ethylenically unsaturated monomer.

In this thermoplastic resin composition, the polyolefin (A) is preferably an ethylene homopolymer or an ethylene copolymer, and is more preferably an ethylene homopolymer or an ethylene copolymer having a density of not less than 0.895 g/cc.

In this thermoplastic resin composition, the thermoplastic resin (D) is preferably a polyolefin.

In this thermoplastic resin composition, other ethylenically unsaturated monomer is preferably an aromatic vinyl compound.

The adhesive resin composition is a composition comprising the above-mentioned modified polyolefin (C) and a thermoplastic resin (D), said modified polyolefin (C) being obtained by graft polymerizing a polyolefin (A) with at least one alicyclic epoxy group-containing ethylenically unsaturated monomer (B) represented by any one of the above-mentioned formulas (1) to (4).

The adhesive resin composition of the invention may be a composition comprising the above-mentioned modified polyolefin (C') and a thermoplastic resin (D), said modified polyolefin (C') being obtained by graft polymerizing a polyolefin (A) with at least one alicyclic epoxy group-containing ethylenically unsaturated monomer (B) represented by any one of the above-mentioned formulas (1) to (4) and other ethylenically unsaturated monomer.

In this adhesive resin composition, the polyolefin (A) is preferably an ethylene homopolymer or an ethylene copolymer, and is more preferably an ethylene homopolymer or an ethylene copolymer having a density of not less than 0.895 g/cc.

In this adhesive resin composition, the thermoplastic resin (D) is preferably a polyolefin.

In this adhesive resin composition, other ethylenically unsaturated monomer is preferably an aromatic vinyl compound.

The present inventors have found that a modified polyolefin obtained by graft polymerizing the polyolefin with the specific ethylenically unsaturated monomer (B) having an alicyclic epoxy group and optionally other ethylenically unsaturated monomer has not only excellent adhesion properties to metals and polar resins such as ethylene/vinylalcohol copolymer and polyamide but also excellent solvent resistance. They have also found that the modified polyolefin can be favorably used for a thermoplastic resin composition and an adhesive resin composition.

### DETAILED DESCRIPTION OF THE INVENTION

The modified polyolefin of the invention, the thermoplastic resin composition comprising the modified polyolefin and the adhesive resin composition comprising the modified polyolefin are described in detail hereinafter.

In the modified polyolefin of the invention, in one aspect, a polyolefin (A) obtained by polymerization of at least one olefin selected from ethylene and α-olefins of 3 to 20 carbon atoms is graft polymerized with at least one alicyclic epoxy group-containing ethylenically unsaturated monomer (B) represented by any one of the later-described formulas (1) to (4) in a quantity of usually 0.01 to 50 % by weight with the proviso that the quantity of the modified polyolefin is 100 % by weight.

In the modified polyolefin of the invention, in another aspect, the polyolefin (A) is graft polymerized with the alicyclic epoxy group-containing ethylenically unsaturated monomer (B) and other ethylenically unsaturated monomer in a quantity of usually 0.01 to 50 % by weight respectively with the proviso that the quantity of the modified polyolefin is 100 % by weight and the total of the graft quantities of the monomer (B) and other ethylenically unsaturated monomer is in the range of 0.02 to 60 % by weight.

### Polyolefin (A)

The polyolefin (A) for use in the invention is obtained by polymerizing at least one olefin selected from ethylene and α-olefins of 3 to 20 carbon atoms.

Examples of the olefins employable include ethylene, and α-olefins of 3 to 20 carbon atoms, such as propylene, 1-butene, 2-butene, 1-pentene, 3-methyl-1-butene, 1-hexene, 4-methyl-1-pentene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, 3-ethyl-1-hexene, 1-octene, 1-decene, 1-dodecene, 1-tetradecene, 1-hexadecene, 1-octadecene and 1-eicosene. Homopolymers or copolymers of these olefins can be used singly or in combinations of plural kinds as the polyolefin (A).

Of various polyolefins, preferable is a polyolefin (A) comprising a polymer or copolymer of at least one olefin selected from ethylene, propylene, 1-butene, 4-methyl-1-pentene, 1-hexene and 1-octene.

More preferable is a polyolefin (A) comprising an ethylene homopolymer or a copolymer of ethylene and at least one α-olefin selected from α-olefins of 3 to 20 carbon atoms. As the α-olefin to be copolymerized with ethylene, particularly preferable is propylene, 1-butene, 4-methyl-1-pentene, 1-hexene or 1-octene.

When an ethylene copolymer is used as the polyolefin (A), the ethylene content is usually not less than 83 % by mol, preferably not less than 95 % by mol, more preferably not less than 97 % by mol.

The density of the polyolefin (A) used in the invention is usually not less than 0.895 g/cc, preferably not less than 0.900 g/cc, more preferably not less than 0.905 g/cc, most preferably not less than 0.910 g/cc, because a modified polyolefin having an excellent balance between the adhesion properties to polar resins and the solvent resistance can be obtained.

The melt flow rate (MFR, ASTM D 1238, 190°C, load of 2.16 kg) of the polyolefin (A) is in the range of usually 0.01 to 500 g/10 min, preferably 0.05 to 200 g/10 min, more preferably 0.1 to 100 g/10 min.

The crystallinity of the polyolefin (A) is usually not less than 10 %, more preferably not less than 25 %, more preferably not less than 35 %.

The weight-average molecular weight (Mw) of the polyolefin (A), as measured by gel permeation chromatography (GPC), is in the range of usually 5,000 to 1,000,000, preferably 8,000 to 500,000, more preferably 10,000 to 200,000.

The molecular weight distribution (Mw/Mn) of the polyolefin (A) is usually not more than 6.0, preferably not more than 5.5, more preferably not more than 5.0. The symbol Mn means a number-average molecular weight.

The polyolefin can be prepared by any of hitherto known processes. For example, the polyolefin can be prepared by the use of a titanium catalyst, a vanadium catalyst, a metallocene catalyst or the like.

### Alicyclic epoxy group-containing ethylenically unsaturated monomer (B)

The alicyclic epoxy group-containing ethylenically unsaturated monomer (B) for use in the invention is represented by any one of the following formulas (1) to (4) : 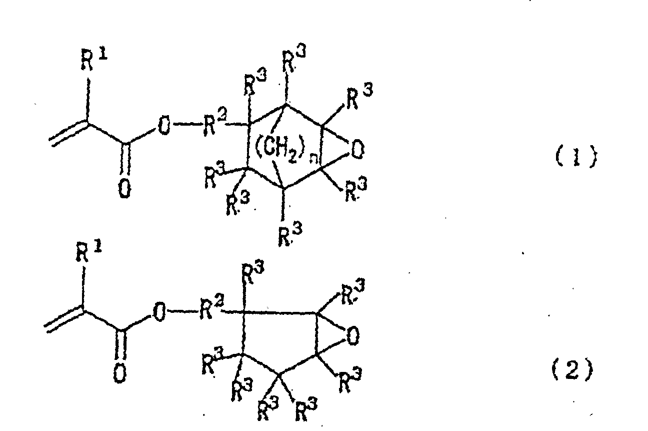 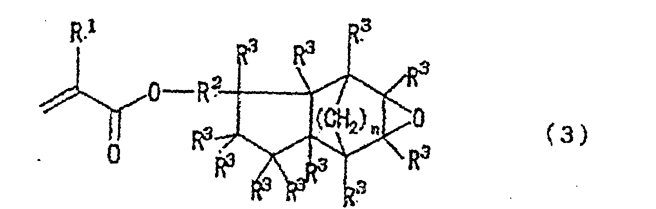 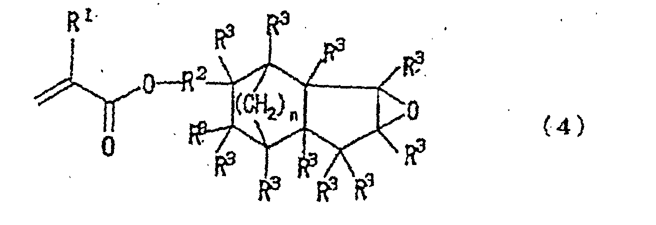 wherein R¹ is hydrogen or methyl, R² is a single bond or a divalent hydrocarbon group of 1 to 20 carbon atoms which may contain a hetero atom, R³ is hydrogen or a hydrocarbon group of 1 to 20 carbon atoms which may contain a hetero atom, n is an integer of 0 to 2, and each R³ may be the same or different.

Examples of the divalent hydrocarbon groups of 1 to 20 carbon atoms which may contain a hetero atom as R², include alkylene groups, such as methylene, ethylene, propylene and butylene; (poly)alkylene oxide groups, such as ethylene oxide group and polyethylene oxide group; and arylene groups, such as phenylene.

Examples of the hydrocarbon groups of 1 to 20 carbon atoms which may contain a hetero atom as R³, include alkyl groups, such as methyl, ethyl, propyl and butyl; hydroxyl group; and alkoxyl groups, such as methoxy and ethoxy.

Examples of the above compounds include compounds represented by the following structural formulas.

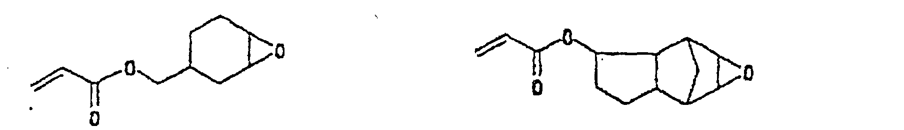

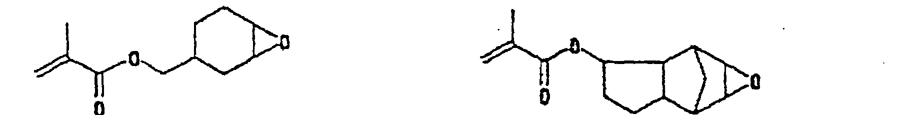

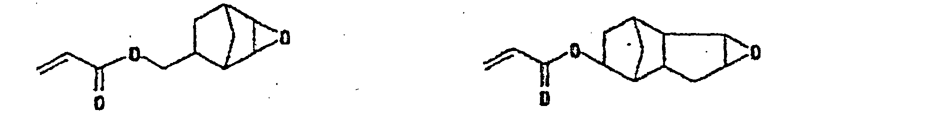

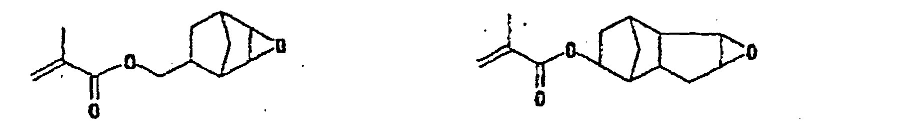

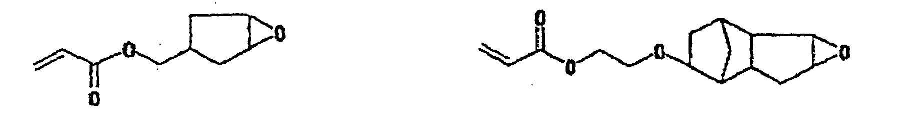

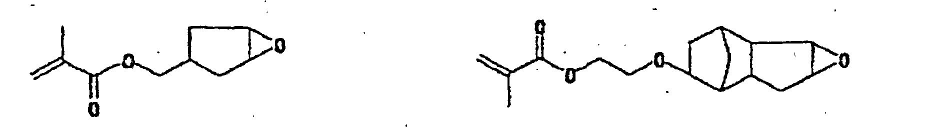

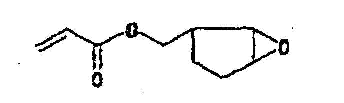

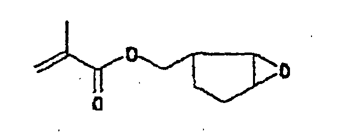

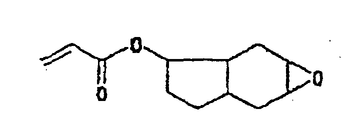

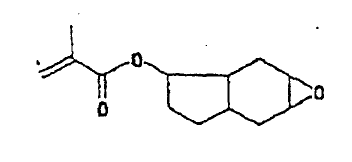

### Other ethylenically unsaturated monomer

In the present invention, an ethylenically unsaturated monomer other than the alicyclic epoxy group-containing ethylenically unsaturated monomer (B) may be used in an amount not detrimental to the objects of the invention.

Other ethylenically unsaturated monomer is, for example, a hydroxyl group-containing ethylenically unsaturated compound, an amino group-containing ethylenically unsaturated compound, an epoxy group-containing ethylenically unsaturated compound, an aromatic vinyl compound, an unsaturated carboxylic acid or its derivative, a vinyl ester compound, or vinyl chloride. Of these, an aromatic vinyl compound is preferable.

Examples of the hydroxyl group-containing ethylenically unsaturated compounds include (meth)acrylic esters, such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxypropyl (meth)acrylate, glycerol mono(meth)acrylate, pentaerythritol mono(meth)acrylate, trimethylolpropane mono(meth)acrylate, tetramethylolethane mono(meth)acrylate, butanediol mono(meth)acrylate, polyethylene glycol mono(meth)acrylate and 2-(6-hydroxyhexanoyloxy)ethyl acrylate, 10-undecen-1-ol, 1-octen-2-ol, 2-methanol norbornene, hydroxystyrene, hydroxyethyl vinyl ether, hydroxybutyl vinyl ether, N-methylolacrylamide, 2-(meth)acryloyloxyethyl acid phosphate, glycerol monoallyl ether, allyl alcohol, allyloxyethanol, 2-butene-1,4-diol, and glycerol monoalcohol.

The amino group-containing ethylenically unsaturated compound is a compound having an ethylenically double bond and an amino group, and is, for example, a vinyl monomer having at least one amino group or substituted amino group represented by the following formula (7) : 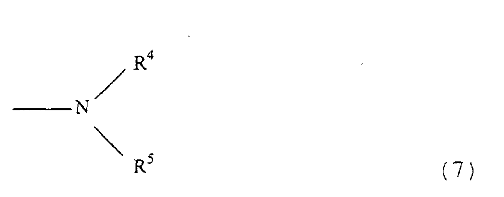 wherein R⁴ is a hydrogen atom, methyl or ethyl, and R⁵ is a hydrogen atom, an alkyl group of 1 to 12 carbon atoms, preferably 1 to 8 carbon atoms, or a cycloalkyl group of 6 to 12 carbon atoms, preferably 6 to 8 carbon atoms. These alkyl group and cycloalkyl group may further have a substituent.

Examples of such amino group-containing ethylenically unsaturated compounds include alkyl ester derivatives of acrylic acid or methacrylic acid, such as aminoethyl (meth)acrylate, propylaminoethyl (meth)acrylate, dimethylaminoethyl methacrylate, aminopropyl (meth)acrylate, phenylaminoethyl methacrylate and cyclohexylaminoethyl methacrylate; vinylamine derivatives, such as N-vinyldiethylamine and N-acetylvinylamine; allylamine derivatives, such as allylamine, methacrylamine, N-methylacrylamine, N,N-dimethylacrylamide and N,N-dimethylaminopropylacrylamide; acrylamide derivatives, such as acrylamide and N-methylacrylamide; aminostyrenes, such as p-aminostyrene; 6-aminohexylsuccinimide (6-aminohexyl succinic acid imide); and 2-aminoethylsuccinimide (2-aminoethyl succinic acid imide).

Examples of the epoxy group-containing ethylenically unsaturated compounds include dicarboxylic acid mono and diglycidyl esters (in case that carbon atom number of alkyl group of monoglycidyl ester is 1-12), such as glycidyl acrylate, glycidyl methacrylate, mono and diglycidyl esters of maleic acid, mono and diglycidyl esters of fumaric acid, mono and diglycidyl esters of crotonic acid, mono and diglycidyl esters of tetrahydrophthalic acid, mono and diglycidyl esters of itaconic acid, mono and diglycidyl esters of butenetricarboxylic acid, mono and diglycidyl esters of citraconic acid, mono and diglycidyl esters of endo-cis-bicyclo[2.2.1]hept-5-ene-2,3-dicarboxylic acid (nadic acid™), mono and diglycidyl esters of endo-cis-bicyclo[2.2.1]hept-5-ene-2-methyl-2,3-dicarboxylic acid (methylnadic acid™), and mono and glycidyl esters of allylsuccinic acid; alkyl glycidyl esters of p-styrenecarboxylic acid, allyl glycidyl ether, 2-methylallyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, and 5,6-epoxy-1-hexene.

The aromatic vinyl compound is, for example, a compound represented by the following formula (8).

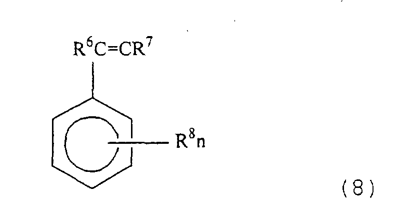

In the above formula, R⁶ and R⁷ may be the same or different and are each a hydrogen atom or an alkyl group of 1 to 3 carbon atoms, specifically methyl, ethyl, propyl or isopropyl.

R⁸ is a hydrocarbon group of 1 to 3 carbon atoms or a halogen atom, specifically methyl, ethyl, propyl, isopropyl, chlorine, bromine, iodine or the like. N is usually an integer of 0 to 5, preferably an integer of 1 to 5.

Examples of such aromatic vinyl compounds include styrene, α-methylstyrene, o-methylstyrene, p-methylstyrene, m-methylstyrene, p-chlorostyrene, m-chlorostyrene, p-chloromethylstyrene, 4-vinylpyridine, 2-vinylpyridine, 5-ethyl-2-vinylpyridine, 2-methyl-5-vinylpyridine, 2-isopropenylpyridine, 2-vinylquinoline, 3-vinylisoquinoline, N-vinylcarbazole and N-vinylpyrrolidone.

Examples of the unsaturated carboxylic acids include unsaturated carboxylic acids, such as acrylic acid, methacrylic acid, maleic acid, fumaric acid, tetrahydrophthalic acid, itaconic acid, citraconic acid, crotonic acid, isocrotonic acid, norbornenedicarboxylic acid, bicyclo[2.2.1]hept-2-ene-5,6-dicarboxylic acid; and acid anhydrides or derivatives (e.g., acid halides, amides imides, esters) of these acids.

Examples of the acid anhydrides and the derivatives include malenyl chloride, malenylimide, maleic anhydride, itaconic anhydride, citraconic anhydride, tetrahydrophthalic anhydride, bicyclo[2.2.1]hept-5-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, aminoethyl methacrylate and aminopropyl methacrylate.

Of these, preferable are (meth)acrylic acid, maleic anhydride, hydroxyethyl (meth)acrylate, glycidyl methacrylate and aminopropyl methacrylate.

Examples of the vinyl ester compounds include vinyl acetate, vinyl propionate, vinyl n-butyrate, vinyl isobutyrate, vinyl pivalate, vinyl caproate, vinyl versatate, vinyl laurate, vinyl stearate, vinyl benzoate, vinyl p-t-butylbenzoate, vinyl salicylate and vinyl cyclohexanecarboxylate.

### Graft polymerization

The modified polyolefin of the invention can be obtained by heating the polyolefin (A), the alicyclic epoxy group-containing ethylenically unsaturated monomer (B), and optionally, other ethylenically unsaturated monomer in the presence or absence of a radical initiator to perform graft polymerization reaction.

It is preferable to conduct the graft polymerization in the presence of a radical initiator because the graft polymerization reaction efficiency is increased. The radical initiator employable herein is, for example, an organic peroxide or an azo compound.

Examples of the organic peroxides include dicumyl peroxide, di-t-butyl peroxide, 2,5-dimethyl-2,5-bis(t-butylperoxy)hexane, 2,5-dimethyl-2,5-bis(t-butylperoxy)hexyne-3, 1,3-bis(t-butylperoxyisoproyl)benzene, 1,1-bis(t-butylperoxy)valerate, benzoyl peroxide, t-butyl peroxybenzoate, acetyl peroxide, isobutyryl peroxide, octanoyl peroxide, decanoyl peroxide, lauroyl peroxide, 3,5,5-trimethylhexanoyl peroxide, 2,4-dichlorobenzoyl peroxide and m-toluyl peroxide.

Examples of the azo compounds include azoisobutyronitrile and dimethylazoisobutyronitrile.

It is desirable to use the radical initiator in an amount of 0.001 to 10 parts by weight based on 100 parts by weight of the polyolefin.

Although the radical initiator can be used by mixing it with the polyolefin and the alicyclic epoxy group-containing ethylenically unsaturated monomer, it may be used by dissolving it in a small amount of an organic solvent. As the organic solvent, any of organic solvents capable of dissolving the radical initiator can be used without restriction.

Examples of such organic solvents include aromatic hydrocarbon solvents, such as benzene, toluene and xylene; aliphatic hydrocarbon solvents, such as pentane, hexane, heptane, octane, nonane and decane; alicyclic hydrocarbon solvents, such as cyclohexane, methylcyclohexane and decahydronaphthalene; chlorinated hydrocarbons, such as chlorobenzene, dichlorobenzene, trichlorobenzene, methylene chloride, chloroform, carbon tetrachloride and tetrachloroethylene; alcohol solvents, such as methanol, ethanol, n-propanol, isopropanol, n-butanol, sec-butanol and tert-butanol; ketone solvents, such as acetone, methyl ethyl ketone and methyl isobutyl ketone; ester type solvents, such as ethyl acetate and dimethyl phthalate; and ether type solvents, such as dimethyl ether, diethyl ether, di-n-amyl ether, tetrahydrofuran and dioxyanisole.

In the present invention, a reducing material may be used in the graft modification of the polyolefin. The reducing material has a function of increasing graft quantities in the resulting modified polyolefin.

The reducing material is, for example, iron(II) ion, chromium ion, cobalt ion, nickel ion, palladium ion, sulfite, hydroxylamine, hydrazine, or a compound containing a group of -SH, -SO₃H, -NHNH₂, -COCH(OH)- or the like.

Specific examples of such reducing materials include ferrous chloride, potassium bichromate, cobalt chloride, cobalt naphthenate, palladium chloride, ethanolamine, diethanolamine, N,N-dimethylaniline, hydrazine, ethyl mercaptan, benzenesulfonic acid and p-toluenesulfonic acid.

The reducing material is used in an amount of usually 0.001 to 5 parts by weight, preferably 0.1 to 3 parts by weight, based on 100 parts by weight of the polyolefin (A).

The graft polymerization may be carried out in any of a state wherein at least a part of the polyolefin (A) is solid, a state wherein the polyolefin (A) is molten, and a state wherein a part of the polyolefin (A) is dissolved in an organic solvent.

When the graft polymerization is carried out in a state wherein at least a part of the polyolefin (A) is dissolved in an organic solvent, the reaction temperature is in the range of usually 50 to 200°C, preferably 60 to 190°C, more preferably 70 to 180°C.

As the organic solvent, any of organic solvents capable of dissolving the polyolefin (A) can be used without restriction. Examples of such organic solvents include aromatic hydrocarbon solvents, such as benzene, toluene and xylene; and aliphatic hydrocarbon solvents, such as pentane, hexane and heptane.

When the graft polymerization is carried out in a state wherein the polyolefin (A) is molten, the reaction temperature is usually not lower than the melting point of the polyolefin. Specifically, the reaction temperature is in the range of usually 80 to 300°C, preferably 80 to 250°C.

When an extruder is used in the graft polymerization, various processes are exemplified. For example, there can be mentioned a process wherein the polyolefin, the alicyclic epoxy group-containing ethylenically unsaturated monomer (and other ethylenically unsaturated monomer when needed), and optionally, a radical initiator are mixed in advance and the mixture is then fed to the extruder through a hopper. There can be mentioned other processes wherein the polyolefin and optionally a radical initiator are fed to the extruder through a hopper and the alicyclic epoxy group-containing ethylenically unsaturated monomer, etc. are fed as they are or as a solvent solution thereof through a feed opening provided at the arbitrary position between the hopper and the tip of the extruder.

When the polyolefin is graft polymerized with the alicyclic epoxy group-containing ethylenically unsaturated monomer and other ethylenically unsaturated monomer, these monomers may be mixed and then fed, or they may be fed to the reaction system through different feed pipes. It is also possible that after completion of feeding of one monomer, the other monomer is added. However, it is preferable to mix the alicyclic epoxy group-containing ethylenically unsaturated monomer with other ethylenically unsaturated monomer, followed by feeding the mixture, or it is preferable to feed them to the reaction system through different feed pipes, because the graft efficiency is high and a modified polyolefin having excellent adhesion properties can be obtained.

In the modified polyolefin prepared as above, the graft quantity of the graft group derived from the alicyclic epoxy group-containing ethylenically unsaturated monomer is in the range of usually 0.01 to 50 % by weight, preferably 0.02 to 30 % by weight, more preferably 0.03 to 10 % by weight, most preferably 0.03 to 5 % by weight, with the proviso that the quantity of the modified polyolefin is 100 % by weight.

When the polyolefin is graft polymerized with the alicyclic epoxy group-containing ethylenically unsaturated monomer (B) and other ethylenically unsaturated monomer in the invention, the graft quantity of other ethylenically unsaturated monomer is in the range of usually 0.01 to 50 % by weight, preferably 0.02 to 30 % by weight, more preferably 0.03 to 10 % by weight, most preferably 0.03 to 5 % by weight. In this case, the total of the graft quantities of the alicyclic epoxy group-containing ethylenically unsaturated monomer (B) and other ethylenically unsaturated monomer is in the range of usually 0.02 to 60 % by weight, preferably 0.03 to 40 % by weight, more preferably 0.04 to 20 % by weight, most preferably 0.06 to 10 % by weight. The graft quantity ratio between the alicyclic epoxy group-containing ethylenically unsaturated monomer (B) and other ethylenically unsaturated monomer is in the range of usually 99.5:0.5 to 1.0:99.0, preferably 90:10 to 5:95, more preferably 80:20 to 10:90.

### Thermoplastic resin composition

The thermoplastic resin composition of the invention may be formed from two or more kinds of the modified polyolefins (C) each of which is obtained by graft polymerizing the polyolefin (A) with at least one alicyclic epoxy group-containing ethylenically unsaturated monomer (B) represented by any one of the following formulas (1) to (4), or may be formed from one or more kinds of the modified polyolefins (C) and other thermoplastic resin (D).

Further, the thermoplastic resin composition of the invention may be formed from two or more kinds of the modified polyolefins (C') each of which is obtained by graft polymerizing the polyolefin (A) with the alicyclic epoxy group-containing ethylenically unsaturated monomer (B) and other ethylenically unsaturated monomer, or may be formed from one or more kinds of the modified polyolefins (C') and other thermoplastic resin (D).

In the thermoplastic resin composition comprising the modified polyolefin (C) or the modified polyolefin (C') and the thermoplastic resin (D), the content of the modified polyolefin (C) or the modified polyolefin (C') is in the range of usually 1 to 90 % by weight,
preferably 2 to 80 % by weight, more preferably 3 to 70 % by weight.

The thermoplastic resin (D) preferably used in the invention is at least one thermoplastic resin selected from polyolefin, polyamide, polyester, polyacetal, polystyrene, an acrylonitrile/butadiene/styrene copolymer (ABS), polymethacrylate, polycarbonate, polyphenylene oxide, polyvinyl chloride, polyvinylidene chloride, polyvinyl acetate, an ethylene/(meth)acrylic ester copolymer and a diene polymer.

Examples of the polyolefins include olefin homopolymers, such as polyethylene, polypropylene, poly-1-butene, polymethylpentene, polymethylbutene; and olefin copolymers, such as an ethylene/α-olefin random copolymer, an ethylene/propylene/diene terpolymer, a propylene/ethylene random copolymer, a propylene/α-olefin random copolymer and a propylene/ethylene/α-olefin terpolymer.

Of these, preferable are polyethylene, polypropylene, an ethylene/α-olefin random copolymer, an ethylene/propylene/diene terpolymer, a propylene/ethylene random copolymer and a propylene/α-olefin random copolymer.

When the polyolefin is a polyolefin obtained from an olefin of 3 or more carbon atoms, this polyolefin may be an isotactic polymer or a syndiotactic polymer.

As the catalyst for use in the preparation of the polyolefin, any of a Ziegler-Natta catalyst and a metallocene catalyst is adoptable.

Examples of the polyamides include aliphatic polyamides, such as nylon-6, nylon-66, nylon-10, nylon-12 and nylon 46; and aromatic polyamides prepared from aromatic dicarboxylic acids and aliphatic diamines. Of these, nylon-6 is preferable.

Examples of the polyesters include aromatic polyesters, such as polyethylene terephthalate, polyethylene naphthalate and polybutylene terephthalate; polycaprolactone; and polyhydroxybutyrate. Of these, polyethylene terephthalate is preferable.

Examples of the polyacetals include polyformaldehyde (polyoxymethylene), polyacetaldehyde, polypropionaldehyde and polybutylaldehyde. Of these, polyformaldehyde is particularly preferable.

The polystyrene may be a homopolymer of styrene or a bipolymer of styrene and acrylonitrile, methyl methacrylate, α-methylstyrene or the like, such as an acrylonitrile/styrene copolymer.

As the ABS, preferably used is ABS comprising constituent units derived from acrylonitrile in amounts of 20 to 35 % by mol, constituent units derived from butadiene in amounts of 20 to 30 % by mol and constituent units derived from styrene in amounts of 40 to 60 % by mol.

As the polymethacrylate, polymethyl methacrylate (PMMA) is preferable.

Examples of the polycarbonates include polycarbonates made from bis(4-hydroxyphenyl)methane, 1,1-bis(4-hydroxyphenyl)ethane, 2,2-bis(4-hydroxyphenyl)propane, 2,2-bis(4-hydroxyphenyl)butane and the like. Of these, a polycarbonate obtained from 2,2-bis(4-hydroxyphenyl)propane is preferable.

As the polyphenylene oxide, poly(2,6-dimethyl-1,4-phenylene oxide) is preferable.

The polyvinyl chloride may be a homopolymer of vinyl chloride or a copolymer of vinyl chloride and vinylidene chloride, an acrylic ester, acrylonitrile, propylene or the like.

As the polyvinylidene chloride, a copolymer of vinylidene chloride and vinyl chloride, acrylonitrile, a (meth)acrylic ester, an allyl ester, an unsaturated ether, styrene or the like, which contains vinylidene chloride units in amounts of not less than 85 %, is used.

The polyvinyl acetate may be a homopolymer of vinyl acetate or a copolymer of vinyl acetate and ethylene or vinyl chloride. Of these, an ethylene/vinyl acetate copolymer is preferable.

Preferred examples of the ethylene/(meth)acrylic ester copolymers include an ethylene/methyl acrylate copolymer, an ethylene/ethyl acrylate copolymer, an ethylene/methyl methacrylate copolymer and an ethylene/ethyl methacrylate copolymer.

Examples of the diene polymers include polybutadiene, polyisoprene and an aromatic hydrocarbon block copolymer which may be hydrogenated.

The aromatic hydrocarbon block copolymer which may be hydrogenated is, for example, an aromatic vinyl/conjugated diene block copolymer comprising a block polymerization unit (X) derived from aromatic vinyl and a block polymerization unit (Y) derived from conjugated diene, or a hydrogenation product thereof.

The aromatic vinyl/conjugated diene block copolymer of the above structure is represented by, for example, X(YX)ₙ or (XY)ₙ (n is an integer of 1 or greater).

Of such block copolymers, preferable is a copolymer represented by X(YX)ₙ, particularly X-Y-X, such as a styrene block copolymer having a structure of polystyrene-polybutadiene (or polyisoprene or polyisoprene/butadiene)-polystyrene.

In the styrene block copolymer, the aromatic vinyl block polymerization unit (X) that is a hard segment is present as a crosslinking point of the conjugated diene block polymerization unit (Y) and forms physical crosslinking (domain). The conjugated diene block polymerization unit (Y) present between the aromatic vinyl block polymerization units (X) is a soft segment and has elastomeric properties.

Examples of the aromatic vinyls to form the block polymerization units (X) include styrene, and styrene derivatives, such as α-methylstyrene, 3-methylstyrene, pmethylstyrene, 4-propylstyrene, 4-dodecylstyrene, 4-cyclohexylstyrene, 2-ethyl-4-benzylstyrene and 4-(phenybutyl)styrene. Of these, styrene is preferable.

Examples of the conjugated dienes to form block polymerization units (Y) include butadiene, isoprene, pentadiene, 2,3-dimethylbutadiene and combinations thereof. Of these, preferable are butadiene, isoprene and a combination of butadiene and isoprene.

When the conjugated diene block polymerization units (Y) are derived from butadiene and isoprene, the units derived from isoprene are preferably contained in amounts of not less than 40 % by mol. The conjugated diene block polymerization units (Y) derived from butadiene and isoprene may be any of random copolymerization units of butadiene and isoprene, block copolymerization units of butadiene and isoprene, and tapered copolymerization units of butadiene and isoprene.

In the aromatic vinyl/conjugated diene block copolymer, the content of the aromatic vinyl block polymerization units (X) is not more than 22 % by weight, preferably 5 to 22 % by weight. The content of the aromatic vinyl polymerization units can be measured by a conventional method such as an infrared spectroscopic method or a NMR spectroscopic method.

The melt flow rate (MFR, ASTM D 1238, 200°C, load of 2.16 kg) of the aromatic vinyl/conjugated diene block copolymer is usually not less than 5 g/10 min, preferably 5 to 100 g/10 min.

The aromatic vinyl/conjugated diene block copolymer can be prepared by various processes, for example, the following processes.
(1) Using an alkyllithium compound such as n-butyllithium as an initiator, the aromatic vinyl compound is polymerized and the conjugated diene is successively polymerized.
(2) The aromatic vinyl compound is polymerized, and then the conjugated diene is polymerized, followed by coupling reaction using a coupling agent.
(3) Using an alkyllithium compound such as n-butyllithium as an initiator, the conjugated diene is polymerized and the aromatic vinyl compound is successively polymerized.

The hydrogenation product of an aromatic vinyl/conjugated diene copolymer can be obtained by hydrogenating such an aromatic vinyl/conjugated diene block copolymer as mentioned above by a known method.

The hydrogenation product of an aromatic vinyl/conjugated diene copolymer usually has a hydrogenation ratio of not less than 90 %. The hydrogenation ratio is a value given when the total amount of carbon-carbon double bonds in the conjugated diene block polymerization units (Y) is 100 %.

Examples of the hydrogenation products of aromatic vinyl/conjugated diene copolymers include a hydrogenation product of a styrene/isoprene block copolymer (SEP), a hydrogenation product of a styrene/isoprene/styrene block copolymer (SEPS, polystyrene/polyethylene-propylene/polystyrene block copolymer), and a hydrogenation product of a styrene/butadiene block copolymer (SEBS, polystyrene/polyethylene-butylene/polystyrene block copolymer).

More specifically, there can be mentioned HYBRAR (available from Kuraray Co., Ltd.), Crayton (available from Shell Kagaku K.K.), Carriflex TR (available from Shell Kagaku K.K.), Sorpren (available from Philips Petrorifam Co.), Europren SOLT (available from Anitch Co.), Toughpren (available from Asahi Chemical Industry Co., Ltd.), Sorpren-T (available from Nippon Elastomer Co.), JSR-TR (available from Japan Synthetic Rubber Co., Ltd.), Denka STR (Denki Kagaku Kogyo K.K.), Quintac (available from Nippon Geon Co., Ltd.), Crayton G (available from Shell Kagaku K.K.) and Toughtec (available from Asahi Chemical Industry Co., Ltd.), all of which are trade names.

The thermoplastic resins (D) mentioned above can be used singly or in combination of two or more kinds. Of the thermoplastic resins, preferably used are polyolefin, polyester, polyamide, polystyrene and a diene polymer.

### Adhesive resin composition

The adhesive resin composition of the invention comprises the modified polyolefin or the thermoplastic resin composition. That is, the adhesive resin composition may be formed from two or more kinds of the modified polyolefins (C) each of which is obtained by graft polymerizing the polyolefin (A) with at least one alicyclic epoxy group-containing ethylenically unsaturated monomer (B) represented by any one of the above formulas (1) to (4), or may be formed from the thermoplastic resin composition comprising one or more kinds of the modified polyolefins (C) and the thermoplastic resin (D).

Further, the adhesive resin composition of the invention may be formed from two or more kinds of the modified polyolefins (C') each of which is obtained by graft polymerizing the polyolefin (A) with the alicyclic epoxy group-containing ethylenically unsaturated monomer (B) and other ethylenically unsaturated monomer, or may be formed from the thermoplastic resin composition comprising one or more kinds of the modified polyolefins (C') and the thermoplastic resin (D).

When the thermoplastic resin composition is used as the adhesive resin composition, the content of the modified polyolefin in the thermoplastic resin composition is in the range of usually 1 to 90 % by weight, preferably 2 to 80 % by weight, more preferably 3 to 70 % by weight.

The adhesive resin composition of the invention can be used for any of the adhesion bonding between polyolefin and polar resin, polyolefin and polyolefin, polar resin and polar resin, polyolefin and metal, and metal and metal. Further, the adhesive resin composition itself can be used by laminating the composition itself onto a metal or a polar resin.

Examples of the polar resins capable of being bonded with the adhesive resin composition of the invention include polyamide, polyester, polyacetal, polystyrene, an acrylonitrile/butadiene/styrene copolymer (ABS), ethylene/vinylalcohol copolymer, polymethacrylate, polycarbonate, polyphenylene oxide, polyvinyl chloride and polyvinylidene chloride.

### Other additives

The modified polyolefin and the thermoplastic resin composition of the invention may contain additives, such as crosslinking agent, filler, crosslinking accelerator, crosslinking assistant, softener, tackifier, anti-aging agent, blowing agent, processing aid, adhesion property imparting agent, inorganic filler, organic filler, crystal nucleating agent, heat stabilizer, weathering stabilizer, antistatic agent, colorant, lubricant, flame retardant and anti-blooming agent.

The crosslinking agent is, for example, sulfur, a sulfur compound or an organic peroxide.

Examples of sulfur include powdered sulfur, precipitated sulfur, colloidal sulfur, surface-treated sulfur and insoluble sulfur.

Examples of the sulfur compounds include sulfur chloride, sulfur dichloride and high-molecular polysulfides. Also employable are sulfur compounds which liberate active sulfur at the crosslinking temperature to crosslink a resin, such as morpholine disulfide, alkylphenol disulfide, tetramethylthiuram disulfide, dipentamethylenethiuram tetrasulfide and selenium dimethyldithiocarbamate.

When sulfur or the sulfur compound is used as the crosslinking agent, it is preferable to use a crosslinking accelerator in combination.

Examples of the organic peroxides include alkyl peroxides, such as dicumyl peroxide (DCP), di-t-butyl peroxide, di-t-butyl peroxy-3,3,5-trimethylcyclohexane, t-butylcumyl peroxide, di-t-amyl peroxide, 2,5-dimethyl-2,5-di(t-butylperoxy)hexyne-3, 2,5-dimethyl-2,5-di(benzoylperoxy)hexane, 2,5-dimethyl-2,5-di(t-butylperoxy)hexane, α,α'-bis(t-butylperoxy-m-isopropyl)benzene and t-butyl hydroperoxide; peroxy esters, such as t-butyl peroxyacetate, t-butyl peroxyisobutyrate, t-butyl peroxypivarate, t-butylperoxymaleic acid, t-butyl peroxyneodecanoate, t-butyl peroxybenzoate and di-t-butyl peroxyphthalate; and ketone peroxides, such as dicyclohexanone peroxide.
These organic peroxides can be used singly or in combination of two or more kinds.

Of the above compounds, preferable are organic peroxides whose half-life period corresponds to one minute at a temperature of 130 to 200°C, such as dicumyl peroxide, di-t-butyl peroxide, di-t-butyl peroxy-3,3,5-trimethylcyclohexane, t-butylcumyl peroxide, di-t-amyl peroxide, t-butyl hydroperoxide and 2,5-dimethyl-2,5-di(t-butylperoxy)hexane. When the organic peroxide is used as the crosslinking agent, it is preferable to use a crosslinking assistant in combination.

Of the above-mentioned various crosslinking agents, sulfur or a sulfur compound, particularly sulfur, is preferably used because a crosslinked product of excellent properties can be obtained, but an organic peroxide is more preferably used because its crosslinking efficiency is particularly excellent.

When the crosslinking agent is sulfur or a sulfur compound, this crosslinking agent is used in an amount of usually 0.5 to 10 parts by weight, preferably 0.5 to 9 parts by weight, more preferably 0.5 to 8 parts by weight, based on 100 parts by weight of the modified polyolefin (C), the modified polyolefin (C') or the thermoplastic resin composition (E).

When the crosslinking agent is an organic peroxide, this crosslinking agent is used in an amount of usually 0.05 to 3.0 parts by weight, preferably 0.1 to 1.5 parts by weight, based on 100 parts by weight of the modified polyolefin (C), the modified polyolefin (C') or the thermoplastic resin composition (E).

This crosslinking agent is used in an amount of 1×10⁻⁵ to 1×10⁻¹ mol, preferably 1×10⁻⁵ to 1×10⁻² mol,
based on 100 g of the modified polyolefin (C), the modified polyolefin (C') or the thermoplastic resin composition (E).

When the amount of the crosslinking agent is in the above range, crosslinking reaction of the modified polyolefin (C), the modified polyolefin (C') or the thermoplastic resin composition (E) proceeds moderately. In addition, the resulting crosslinked product is excellent in elastomeric properties, such as strain recovery and impact resilience, and mechanical strength, and an extruded sheet thereof is almost free from surface roughening and shows good appearance. Moreover, lowering of a molecular weight of the modified polyolefin (C), the modified polyolefin (C') or the thermoplastic resin composition (E) hardly takes place, and a composition (molded product) obtained therefrom tends to have excellent mechanical strength.

The crosslinked composition has more excellent tensile strength and tear strength, shows more elastomeric properties such as lower surface hardness and smaller elongation set, and has better property balance as an elastomer, as compared with a composition obtained by only a usual melt kneading operation.

Whether the composition is crosslinked or not can be judged by whether the amount of a residue given after the composition is boiled in boiling xylene for 4 hours or more and then filtered through a wire gauze of 400 mesh is not less than 10 parts by weight based on 100 parts by weight of the composition.

The fillers may include those giving reinforcing property and/or those giving no reinforcing property.

The fillers giving reinforcing property contribute to enhancing mechanical properties of the crosslinked product, such as tensile strength, tear strength and abrasion resistance. Examples of such fillers include carbon black, such as SRF, GPF, FEF, MAF, HAF, ISAF, SAF, FT and MT, carbon black having been surface treated with a silane coupling agent or the like, silica, activated calcium carbonate and finely powdered talc.

When carbon black is used as the filler, any of carbon black usually used for rubbers is employable independent of the type of the carbon black.

The fillers having no reinforcing property are used for the purpose of enhancing rigidity of rubber products or reducing the cost, without affecting the properties so much.

Examples of such fillers include talc, clay and calcium carbonate.

To prepare a crosslinked product from the modified polyolefin (C), the modified polyolefin (C') or the thermoplastic resin composition (E) is first mixed with a crosslinking agent, then the obtained compound molded into a desired shape and heated to perform crosslinking, as is the case with usual crosslinking of ordinary rubbers.

Examples of the crosslinking accelerators include thiazole compounds, such as N-cyclohexyl-2-benzothiazole sulfenamide (CBZ), N-oxydiethylene-2-benzothiazole sulfenamide, N,N-diisopropyl-2-benzothiazole sulfenamide, 2-mercaptobenzothiazole, 2-(2,4-dinitrophenyl)mercaptobenzothiazole, 2-(2,6-diethyl-4-morpholinothio)benzothiazole and dibenzothiazyl disulfide; guanidine compounds, such as diphenylguanidine (DPG), triphenylguanidine, diorthonitrileguanidine, orthonitrile biguanide and diphenylguanidine phthalate; aldehyde amine or aldehyde-ammonia compounds such as acetaldehyde-aniline reaction product, butylaldehyde-aniline condensate, hexamethylenetetramine and acetaldehyde ammonia; imidazoline compounds, such as 2-mercaptoimidazoline; thiourea compounds, such as thiocarbamide, diethylthiourea, dibutylthiourea, trimethylthiourea and diorthotolylthiourea; thiuram compounds, such as tetramethylthiuram monosulfide, tetramethylthiuram disulfide, tetraethylthiuram disulfide, tetrabutylthiuram disulfide and pentamethylenethiuram tetrasulfide; dithioic acid salt compounds, such as zinc dimethyldithiocarbamate, zinc diethyldithiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate and tellurium dimethyldithiocarbamate; xanthate compounds, such as zinc dibutylxanthate; and other compounds, such as zinc white.

The crosslinking accelerator is used in an amount of 1 to 20 parts by weight, preferably 2 to 10 parts by weight, based on 100 parts by weight of the modified polyolefin (C), the modified polyolefin (C') or the thermoplastic resin composition (E).

The crosslinking assistant is used in the organic peroxide crosslinking. Examples of the crosslinking assistants include sulfur; quinone dioxime compounds, such as p-quinone dioxime and p,p'-dibenzoylquinone dioxime; polyfunctional monomers, e.g., (meth)acrylate compounds, such as trimethylpropane triacrylate, polyethylene glycol dimethacrylate; allyl compounds, such as diallyl phthalate and triallyl cyanurate; maleimide compounds, such as N,N'-m-phenylene bismaleimide; and divinylbenzene.

The crosslinking assistant is used in an amount of 0.5 to 2 mol based on 1 mol of the organic peroxide, preferably an equimolar amount to the organic peroxide. If the amount of the crosslinking assistant exceeds the above amount, the crosslinking reaction proceeds excessively to lower flowability of the composition and thereby lower moldability. As a result, the amount of the unreacted monomer remaining in the composition may become large.

As the softeners, those hitherto added to rubbers are widely used. Examples of the softeners include petroleum type softeners, such as process oil,
lubricating oil, paraffin, liquid paraffin, petroleum asphalt and vaseline; coal tar type softeners, such as coal tar and coal tar pitch; aliphatic oil type softeners, such as castor oil, linseed oil, rapeseed oil and coconut oil; waxes, such as tall oil, factice, beeswax, carnauba wax and lanolin; fatty acids and fatty acid salts, such as ricinoleic acid, palmitic acid, barium stearate, calcium stearate and zinc laurate; and synthetic polymer materials, such as petroleum resin, atactic polypropylene and coumarone-indene resin.

Of these, petroleum type softeners are preferably used, and process oil is particularly preferably used.

The softener is used in an amount of not more than 200 parts by weight, preferably 5 to 200 parts by weight, more preferably 10 to 150 parts by weight, still more preferably 10 to 100 parts by weight, based on 100 parts by weight of the modified polyolefin (C), the modified polyolefin (C') or the thermoplastic resin composition (E).

As the blowing agents, those generally used for expansion molding of rubbers can be widely used.

Examples of the blowing agents include inorganic blowing agents, such as sodium bicarbonate, sodium carbonate, ammonium bicarbonate, ammonium carbonate and ammonium nitrite; nitroso compounds, such as N,N'-dimethyl-N,N'-dinitrosoterephthalamide and N,N'-dinitrosopentamethylenetetramine; azo compounds, such as azodicarbonamide, azobisisobutyronitrile, azocyclohexylnitrile, azodiaminobenzene and barium azodicarboxylate; sulfonyl hydrazide compounds, such as benzenesulfonyl hydrazide, toluenesulfonyl hydrazide, p,p'-oxybis(benzenesulfonyl hydrazide) and diphenylsulfone-3,3'-disulfonyl hydrazide; and azide compounds, such as calcium azide, 4,4'-diphenyldisulfonyl azide, p-toluenesulfonyl azide.

Of these, preferable are nitroso compounds, azo compounds and azide compounds.

The blowing agent is used in an amount of 0.5 to 30 parts by weight, preferably 1 to 20 parts by weight, based on 100 parts by weight of the modified polyolefin (C), the modified polyolefin (C') or the thermoplastic resin composition (E). From the modified polyolefin (C), the modified polyolefin (C') or the thermoplastic resin composition (E), which contains the blowing agent in the above amount, a foamed product having an apparent specific gravity of 0.03 to 0.8 g/cm³ can be prepared.

A blowing assistant can be used in combination with the blowing agent. Use of the blowing assistant in combination contributes to lowering of a decomposition temperature of the blowing agent, acceleration of decomposition, and formation of uniform cells.

Examples of the blowing assistants include organic acids, such as salicylic acid, phthalic acid, stearic acid and oxalic acid; and urea or its derivatives. The blowing assistant is used in an amount of 0.01 to 10 parts by weight, preferably 0.1 to 5 parts by weight, based on 100 parts by weight of the modified polyolefin (C), the modified polyolefin (C') or the thermoplastic resin composition (E).

As the processing aids, those generally added to rubbers can be widely used. Examples of the processing aids include acids, such as ricinoleic acid, stearic acid, palmitic acid and lauric acid; salts of these higher fatty acids, such as barium stearate, zinc stearate and calcium stearate; and esters.

The processing aid is used in an amount of not more than 10 parts by weight, preferably not more than 5 parts by weight, based on 100 parts by weight of the modified polyolefin (C), the modified polyolefin (C') or the thermoplastic resin composition (E).

The adhesion property imparting agent improves adhesion properties between the crosslinked product and a decorative layer such as a coating film. Examples of such adhesion property imparting agents include an organotin compound, a tertiary amine compound, a hydroxyl group-containing (co)polymer and a metallic hydroxide.

Examples of the inorganic fillers include powder fillers, e.g., natural silicate compounds, such as finely powdered talc, kaolinite, calcined clay, pyrophyllite, sericite and wallastonite, carbonates, such as precipitated calcium carbonate, heavy calcium carbonate and magnesium carbonate, hydroxides, such as aluminum hydroxide and magnesium hydroxide, oxides, such as zinc oxide, zinc white and magnesium oxide, and synthetic silicate, such as hydrous calcium silicate, hydrous aluminum silicate, hydrous silicic acid and anhydrous silicic acid; flake fillers such as mica; fibrous fillers, such as basic magnesium sulfate whisker, calcium titanate whisker, aluminum borate whisker, sepiolite, PMF (processed mineral fiber), xonotlite, potassium titanate and ellestadite; and balloon fillers, such as glass balloon and fly ash balloon.

Of these, talc is preferably used, and finely powdered talc having an average particle diameter of 0.01 to 10 um is particularly preferably used in the invention. The average particle diameter of the talc can be measured by a liquid phase precipitation method.

The inorganic filler, particularly talc, may be one having been subjected to a surface treatment or no surface treatment.

Examples of the surface treatments include chemical treatments using treating agents, such as silane coupling agent, higher fatty acid, fatty acid metallic salt, unsaturated organic acid, organic titanate, resin acid and polyethylene glycol, and physical treatments.

By the use of talc having been subjected to such a surface treatment, a molded product having excellent weld strength, coating properties and moldability can be obtained.

The inorganic fillers mentioned above may be used in combination of two or more kinds. In the present invention, organic fillers, such as high styrenes, lignin and regenerated rubbers, can be used in combination with the inorganic fillers.

As the crystal nucleating agents, various nucleating agents hitherto known are used without any restriction. Examples of the crystal nucleating agents include the below-described aromatic phosphoric ester salt, benzylidenesorbitol, aromatic carboxylic acid and rosin nucleating agent.

The aromatic phosphoric ester salt is, for example, a compound represented by the following formula (9) : 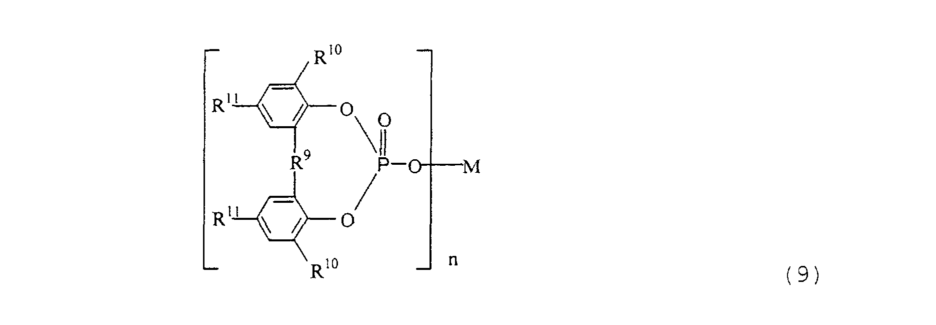 wherein R⁹ is an oxygen atom, a sulfur atom or a hydrocarbon group of 1 to 10 carbon atoms, R¹⁰ and R¹¹ are each a hydrogen atom or a hydrocarbon group of 1 to 10 carbon atoms, R¹⁰ and R¹¹ may be the same or different, R¹⁰ and R¹⁰, R¹¹ and R¹¹, or R¹⁰ and R¹¹ may be bonded to form a ring, M is a monovalent to trivalent metal atom, and n is an integer of 1 to 3.

Examples of the compounds represented by the formula (9) include sodium-2,2'-methylene-bis(4,6-di-t-butylphenyl) phosphate, sodium-2,2'-ethylidene-bis(4,6-di-t-butylphenyl) phosphate, lithium-2,2'-methylene-bis(4,6-di-t-butylphenyl) phosphate, lithium-2,2'-ethylidene-bis(4,6-di-t-butylphenyl) phosphate, sodium-2,2'-ethylidene-bis(4-i-propyl-6-t-butylphenyl) phosphate, lithium-2,2'-methylene-bis(4-methyl-6-t-butylphenyl) phosphate, lithium-2,2'-methylene-bis(4-ethyl-6-t-butylphenyl) phosphate, calcium-bis[2,2'-thiobis(4-methyl-6-t-butylphenyl) phosphate], calcium-bis[2,2'-thiobis(4-ethyl-6-t-butylphenyl) phosphate], calcium-bis[2,2'-thiobis(4,6-di-t-butylphenyl) phosphate], magnesium-bis[2,2'-thiobis(4,6-di-t-butylphenyl) phosphate], magnesium-bis[2,2'-thiobis(4-t-octylphenyl) phosphate], sodium-2,2'-butylidene-bis(4,6-di-methylphenyl) phosphate, sodium-2,2'-butylidene-bis(4,6-di-t-butylphenyl) phosphate, sodium-2,2'-t-octylmethylene-bis(4,6-di-methylphenyl) phosphate, sodium-2,2'-t-octylmethylene-bis(4,6-di-t-butylphenyl) phosphate, calcium-bis[2,2'-methylene-bis(4,6-di-t-butylphenyl) phosphate], magnesium-bis[2,2'-methylene-bis(4,6-di-t-butylphenyl) phosphate], barium-bis[2,2'-methylene-bis(4,6-di-t-butylphenyl) phosphate], sodium-2,2'-methylene-bis(4-methyl-6-t-butylphenyl) phosphate, sodium-2,2'-methylene-bis(4-ethyl-6-t-butylphenyl) phosphate, sodium(4,4'-dimethyl-5,6'-di-t-butyl-2,2'-biphenyl) phosphate, calcium-bis[(4,4'-dimethyl-6.6'-di-t-butyl-2,2'-biphenyl) phosphate], sodium-2,2'-ethylidene-bis(4-m-butyl-6-t-butylphenyl) phosphate, sodium-2,2'-methylene-bis(4,6-di-methylphenyl) phosphate, sodium-2,2'-methylene-bis(4,6-di-ethylphenyl) phosphate, potassium-2,2'-ethylidene-bis(4,6-di-t-butylphenyl) phosphate, calcium-bis[2,2'-ethylidene-bis(4,6-di-t-butylphenyl) phosphate], magnesium-bis[2,2'-ethylidene-bis(4,6-di-t-butylphenyl) phosphate], barium-bis[2,2'-ethylidene-bis(4,6-di-t-butylphenyl) phosphate], aluminum-tris[2,2'-methylene-bis(4,6-di-t-butylphenyl) phosphate], aluminum-tris[2,2'-ethylidene-bis(4,6-di-t-butylphenyl) phosphate], and mixtures of two or more kinds of these compounds.

Of these, sodium-2,2'-methylene-bis(4,6-di-t-butylphenyl) phosphate is particularly preferable.

Another example of the aromatic phosphoric ester salt is a compound represented by the following formula (10) : 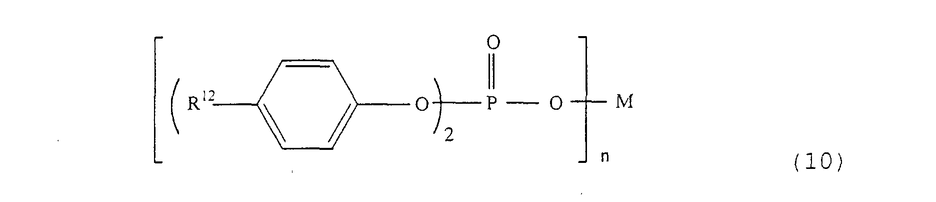 wherein R¹² is a hydrogen atom or a hydrocarbon group of 1 to 10 carbon atoms, M is a monovalent to trivalent metal atom, and n is an integer of 1 to 3.

Examples of the compounds represented by the formula (10) include sodium-bis(4-t-butylphenyl) phosphate, sodium-bis(4-methylphenyl) phosphate, sodium-bis(4-ethylphenyl) phosphate, sodium-bis(4-i-propylphenyl) phosphate, sodium-bis(4-t-octylphenyl) phosphate, potassium-bis(4-t-butylphenyl) phosphate, calcium-bis(4-t-butylphenyl) phosphate, magnesium-bis(4-t-butylphenyl) phosphate, lithium-bis(4-t-butylphenyl) phosphate and aluminum-bis(4-t-butylphenyl) phosphate.

Of these, sodium-bis(4-t-butylphenyl) phosphate is particularly preferable.

The benzylidenesorbitol is, for example, a compound represented by the following formula (11): 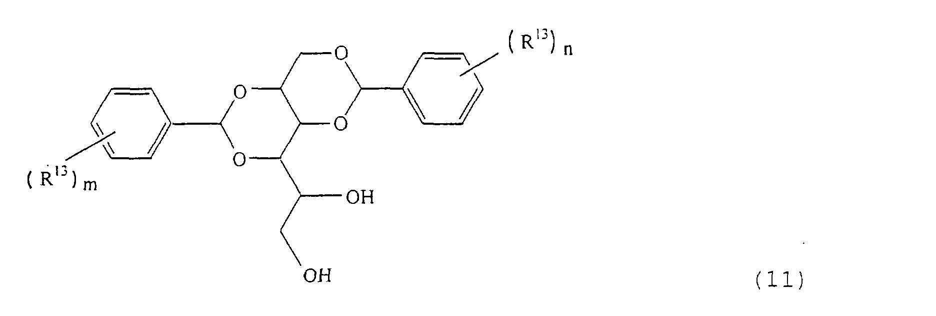 wherein each R¹³ may be the same or different and is a hydrogen atom or a hydrocarbon group of 1 to 10 carbon atoms, and m and n are each an integer of 0 to 5.

Examples of the compounds represented by the formula (11) include 1,3,2,4-dibenzylidenesorbitol, 1,3-benzylidene-2,4-p-methylbenzylidenesorbitol, 1,3-benzylidene-2,4-p-ethylbenzylidenesorbitol, 1,3-p-methylbenzylidene-2,4-benzylidenesorbitol, 1,3-p-ethylbenzylidene-2,4-benzylidenesorbitol, 1,3-p-methylbenzylidene-2,4-p-ethylbenzylidenesorbitol, 1,3-p-ethylbenzylidene-2,4-p-methylbenzylidenesorbitol, 1,3,2,4-di(p-methylbenzylidene)sorbitol, 1,3,2,4-di(p-ethylbenzylidene)sorbitol, 1,3,2,4-di(p-n-propylbenzylidene)sorbitol, 1,3,2,4-di(p-i-propylbenzylidene)sorbitol, 1,3,2,4-di(p-n-butylbenzylidene)sorbitol, 1,3,2,4-di(p-s-butylbenzylidene)sorbitol, 1,3,2,4-di(p-t-butylbenzylidene)sorbitol, 1,3,2,4-di(2',4'-dimethylbenzylidene)sorbitol, 1,3,2,4-di(p-methoxybenzylidene)sorbitol, 1,3,2,4-di(p-ethoxybenzylidene)sorbitol, 1,3-benzylidene-2,4-p-chlorobenzylidenesorbitol, 1,3-p-chlorobenzylidene-2,4-benzylidenesorbitol, 1,3-p-chlorobenzylidene-2,4-p-methylbenzylidenesorbitol, 1,3-p-chlorobenzylidene-2,4-p-ethylbenzylidenesorbitol, 1,3-p-methylbenzylidene-2,4-p-chlorobenzylidenesorbitol, 1,3-p-ethylbenzylidene-2,4-p-chlorobenzylidenesorbitol, 1,3,2,4-di(p-chlorobenzylidene)sorbitol, and mixtures of two or more kinds of these compounds.

Of these, 1,3,2,4-dibenzylidenesorbitol, 1,3,2,4-di(p-methylbenzylidene)sorbitol, 1,3,2,4-di(p-ethylbenzylidene)sorbitol, 1,3-p-chlorobenzylidene-2,4-p-methylbenzylidenesorbitol, 1,3,2,4-di(p-chlorobenzylidene)sorbitol, and mixtures of two or more kinds of these compounds are particularly preferable.

Of the above benzylidenesorbitols, a preferred example is a compound represented by the following formula (12): 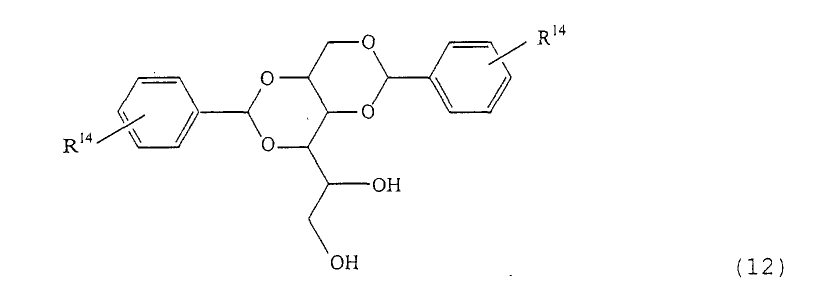 wherein each R¹⁴ may be the same or different and is methyl or ethyl.

The aromatic carboxylic acid is, for example, aluminum hydroxy-di-para-t-butyl benzoate represented by the following formula (13):

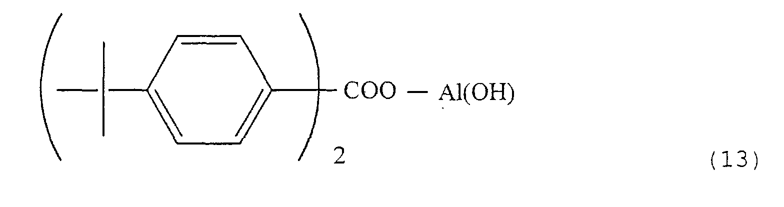

The rosin type crystal nucleating agent is, for example, a metallic salt of a rosin acid. The metallic salt of a rosin acid is a reaction product of a rosin acid and a metallic compound.

Examples of the rosin acids include natural rosin, such as gum rosin, tall oil rosin and wood rosin; various modified rosin, such as disproportionated rosin, hydrogenated rosin, dehydrogenated rosin, polymerization rosin, α,β-ethylenically unsaturated carboxylic acid-modified rosin; and purified products of the natural rosin and the modified rosin.

Examples of the unsaturated carboxylic acids used for preparing the α,β-ethylenically unsaturated carboxylic acid-modified rosin include maleic acid, maleic anhydride, fumaric acid, itaconic acid, itaconic anhydride, citraconic acid, acrylic acid and methacrylic acid.

Of the above rosin acids, preferable is at least one rosin acid selected from natural rosin, modified rosin, purified products of natural rosin and purified products of modified rosin. The rosin acids contain plural resin acids selected from pimaric acid, sandarachopimaric acid, palustric acid, isopimaric acid, abietic acid, dehydroabietic acid, neoabietic acid, dihydropimaric acid, dihydroabietic acid and tetrahydroabietic acid.

The metallic compound which reacts with the rosin acid to form a metallic salt is, for example, a compound which has a metal element such as sodium, potassium or magnesium and forms a salt together with the rosin acid. Examples of such compounds include chlorides, nitrates, acetates, sulfates, carbonates, oxides and hydroxides of the above metals.

Examples of other crystal nucleating agents include high-melting point polymers, metallic salts of aromatic carboxylic acids or aliphatic carboxylic acids, and inorganic compounds.

Examples of the high-melting point polymers include polyvinyl cycloalkanes, such as polyvinyl cyclohexane and polyvinyl cyclopentene, poly-3-methyl-1-pentene, poly-3-methyl-1-butene, and polyalkenylsilane.

Examples of the metallic salts of aromatic carboxylic acids or aliphatic carboxylic acids include aluminum benzoate, aluminum p-t-butylbenzoate, sodium adipate, sodium thiophenecarboxylate and sodium pyrrolecarboxylicate.

### EXAMPLE

The present invention is further described with reference to the following examples, but it should be construed that the invention is in no way limited to those examples.

In the examples, properties were measured under the following conditions.

### (1) Density

A strand obtained by the measurement of melt flow rate at 190°C under a load of 2.16 kg was heat treated at 120°C for 1 hour and then slowly cooled to room temperature over a period of 1 hour, followed by measuring the density using a density gradient tube.

### (2) Melt flow rate (MFR)

The melt flow rate was measured at 190°C under a load of 2.16 kg in accordance with ASTM D1238-65T.

### (3) Crystallinity

A pressed sheet of 1.0 mm thickness which was left after molding over 24 hours was subjected to X-ray diffractometry to measure crystallinity.

### Example 1

A 1-liter autoclave was charged with toluene as a reaction solvent and an ethylene/4-methyl-1-pentene copolymer (LLDPE-1, density: 0.920 g/cc, ethylene content: 97 % by mol, MFR (190°C): 20.0 g/10 min, crystallinity: 49.6 %) in an amount of 50 g based on 170 ml of toluene, and the copolymer was dissolved in toluene at 140°C in a nitrogen atmosphere. Then, to the polymer solution were dropwise added a toluene solution of 3,4-epoxycyclohexylmethyl acrylate (3,4-epoxycyclohexylmethyl acrylate/toluene: 5 g/40 ml) and a toluene solution of dicumyl peroxide (dicumyl peroxide/toluene: 0.25 g/40 ml) through different feed pipes over a period of 4 hours. After the dropwise addition was completed, the reaction was further conducted for 2 hours at the same temperature. After the reaction was completed, the system was cooled to room temperature, and the toluene solution of a polymer was introduced into 3 liters of acetone to precipitate a polymer. The polymer precipitated was filtered, repeatedly washed with acetone and vacuum dried at 80°C for one day and night to obtain a desired modified ethylene copolymer. From the elemental analysis of the modified ethylene copolymer, the graft quantity of the 3,4-epoxycyclohexylmethyl acrylate was found to be 1.14 % by weight.

From the modified ethylene copolymer, a film was produced in the following manner, and the film was measured on the adhesion strength to Al. The results are set forth in Table 1.

### Production of film

On a press plate, an aluminum sheet having a thickness of 0.1 mm, a polyimide sheet and an aluminum sheet having a thickness of 100 µm from the center of which a square of 20 cm x 20 cm had been cut away were superposed in this order, and on the center (cut portion) was placed 4.0 g of a sample (modified polymer). Then, a polyimide sheet, an aluminum sheet and a press plate were further superposed thereon in this order.

The sample interposed between the press plates were placed in a hot press at 190°C and preheated for about 5 minutes. In order to remove bubbles from the sample, operations of pressurizing (50 kg/cm²-G) and pressure release were repeated several times. Subsequently, the pressure was increased to 100 kg/cm²-G, and the sample was heated for 5 minutes under pressure. After pressure release, the press plates were taken out of the pressing machine and transferred into a different pressing machine with a compression section kept at 20°C, followed by cooling for 5 minutes under a pressure of 100 kg/cm²-G. After pressure release, the sample was taken out. Of the resulting film (modified polymer film), a portion having a uniform thickness of about 150 to 170 µm was used to measure adhesion strength.

### Measurement of adhesion strength to Al

The modified polymer film was sandwiched between two square aluminum sheets of 20 cm × 20 cm (thickness: 50 µm), and the aluminum sheets and the modified polymer film were laminated under the same pressing conditions as in the above "Production of film". The resulting laminate was cut to give a strip having a width of 15 mm, and the aluminum sheet and the modified polymer film were peeled from each other at the adhesive interface at a peel angle of 180°, to measure peel strength.

### Example 2

A modified polymer was prepared in the same manner as in Example 1, except that the component concentration in the toluene solution of 3,4-epoxycyclohexylmethyl acrylate was changed to 10 g/40 ml (3,4-epoxycyclohexylmethyl acrylate/toluene). From the modified polymer, a film was produced in the same manner as in Example 1, and the film was subjected to the aforesaid tests. The results are set forth in Table 1.

### Example 3

A modified polymer was prepared in the same manner as in Example 1, except that 3,4-epoxycyclohexylmethyl methacrylate instead of 3,4-epoxycyclohexylmethylacrylate (Concentration of 3,4-epoxycyclohexylmethyl methacrylate in toluene solution was 5 g/40 ml as well as Example 1) was used as the alicyclic epoxy group-containing ethylenically unsaturated monomer. From the modified polymer, a film was produced in the same manner as in Example 1, and the film was subjected to the aforesaid tests. The results are set forth in Table 1.

### Example 4

A modified polymer was prepared in the same manner as in Example 1, except that an ethylene/octene copolymer (LLDPE-2, density: 0.905 g/cc, ethylene content: 95 % by mol, MFR (190°C): 20.0 g/10 min, crystallinity: 35 %) was used as the polyolefin in an amount of 50 g based on 170 ml of toluene. From the modified polymer, a film was produced in the same manner as in Example 1, and the film was subjected to the aforesaid tests. The results are set forth in Table 1.

### Comparative Example 1

A modified polymer was prepared in the same manner as in Example 1, except that a toluene solution of glycidyl methacrylate instead of 3,4-epoxyclohexylmethylacrylate (Concentration of glycidyl methacrylate in toluene solution was 5 g/40 ml as well as Example 1.) was used, wherein glycidyl methacrylate did not have the alicyclic epoxy group. From the modified polymer, a film was produced in the same manner as in Example 1, and the film was subjected to the aforesaid tests. The results are set forth in Table 1.

### Example 5

A modified polymer was prepared in the same manner as in Example 1, except that an ethylene/1-butene copolymer (EBR-1, density: 0.896 g/cc, ethylene content: 90 % by mol, MFR (230°C): 6.8 g/10 min, crystallinity: 19 %) was used as the polyolefin in an amount of 50 g based on 170 ml of toluene. From the modified polymer, a film was produced in the same manner as in Example 1, and the film was subjected to the aforesaid tests. The results are set forth in Table 1.

### Comparative Example 2

From an ethylene/glycidyl methacrylate copolymer (EGMA, glycidyl methacrylate content: 12 % by weight), a film was produced in the same manner as in Example 1, and the film was subjected to the aforesaid tests. The results are set forth in Table 1.

### Example 6

A modified polymer was prepared in the same manner as in Example 1, except that a toluene solution of 3,4-epoxycyclohexylmethyl acrylate (3,4-epoxycyclohexylmethyl acrylate concentration in toluene was 5 g/40 ml) was used as the alicyclic epoxy group-containing ethylenically unsaturated monomer, a toluene solution of styrene (styrene concentration in toluene was 5 g/40 ml) was used as other ethylenically unsaturated monomer, and a mixture of these solutions was added to the reaction system. From the modified polymer, a film was produced in the same manner as in Example 1, and the film was subjected to the aforesaid tests. The results are set forth in Table 1.

### Example 7

A modified polymer was prepared in the same manner as in Example 1, except that a toluene solution of 3,4-epoxycyclohexylmethyl acrylate (3,4-epoxycyclohexylmethyl acrylate concentration in toluene was 12.5 g/40 ml) was used as the alicyclic epoxy group-containing ethylenically unsaturated monomer, a toluene solution of styrene (styrene concentration in toluene was 12.5 g/40 ml) was used as other ethylenically unsaturated monomer, and a mixture of these solutions was added to the reaction system. From the modified polymer, a film was produced in the same manner as in Example 1, and the film was subjected to the aforesaid tests. The results are set forth in Table 1.

### Example 8

A modified polymer was prepared in the same manner as in Example 1, except that a toluene solution of 3,4-epoxycyclohexylmethyl acrylate (3,4-epoxycyclohexylmethyl acrylate concentration in toluene was 25 g/40 ml) was used as the alicyclic epoxy group-containing ethylenically unsaturated monomer, a toluene solution of styrene (styrene concentration in toluene was 25 g/40 ml) was used as other ethylenically unsaturated monomer, and a mixture of these solutions was added to the reaction system. From the modified polymer, a film was produced in the same manner as in Example 1, and the film was subjected to the aforesaid tests. The results are set forth in Table 1.

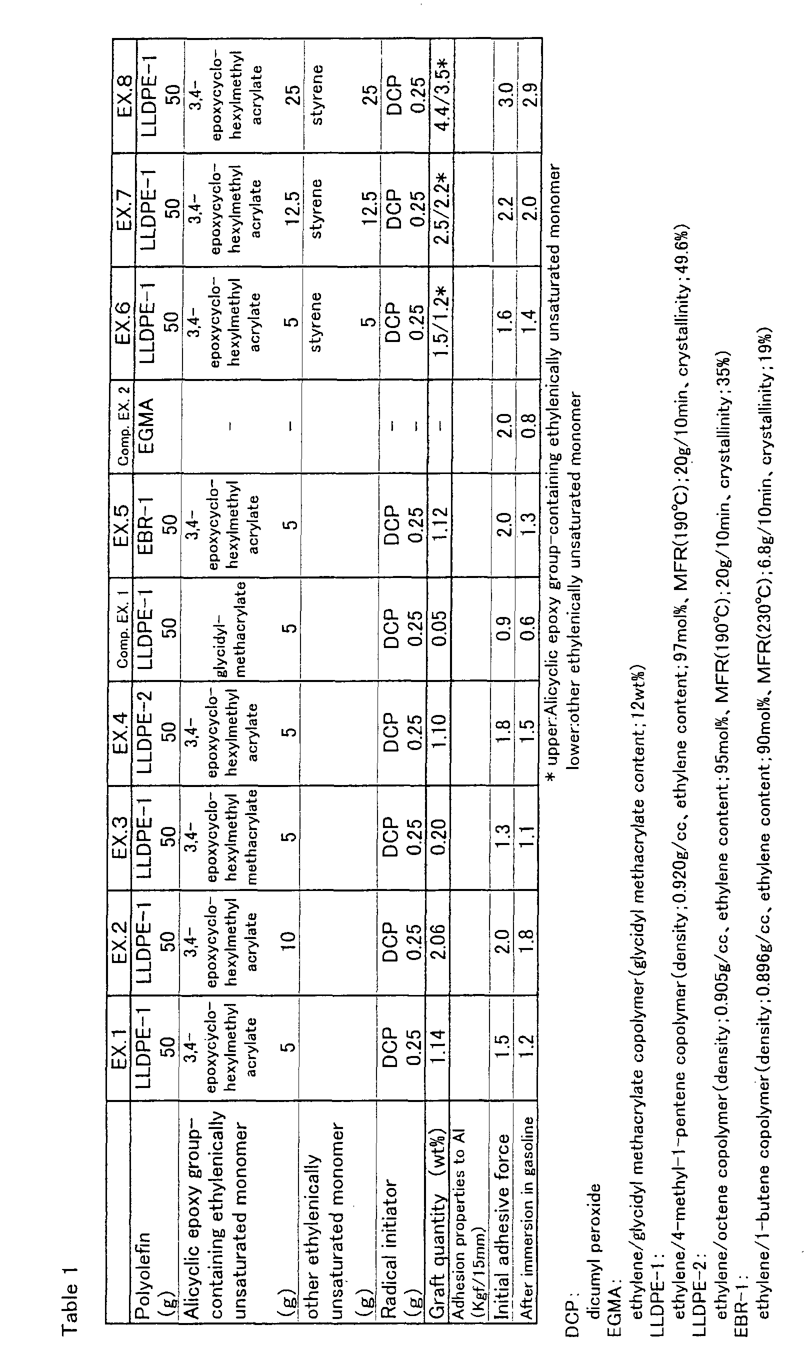

As is evident from Table 1, the modified polyolefins of the invention (Examples 1 to 5) obtained by graft polymerizing a polyolefin with an alicyclic epoxy group-containing monomer and the modified polyolefins of the invention (Examples 6 to 8) obtained by graft polymerizing a polyolefin with an alicyclic epoxy group-containing monomer and other ethylenically unsaturated monomer had high initial adhesive forces in the adhesion properties to Al. In addition, the adhesion properties of the modified polyolefins were still high even after immersion in gasoline, and the modified polyolefins had excellent adhesion properties to metals and polar resins and excellent solvent resistance. In particular, the modified polyolefins using an ethylene copolymer of high density and having high ethylene content (Examples 1 to 4 and 6 to 8) were excellent.

On the other hand, in the case (Comparative Example 1) where only an ethylenically unsaturated monomer which was different from the alicyclic epoxy group-containing ethylenically unsaturated monomer for the invention was used, and in the case (Comparative Example 2) where a copolymer (ethylene/glycidyl methacrylate copolymer) which was different from the modified polyolefin of the invention was used, the adhesion properties to Al were low. In Comparative Example 2, although the initial adhesive force was high similarly to other examples, the adhesion properties were markedly lowered after immersion in gasoline.

### EFFECT OF THE INVENTION

The modified polyolefin of the invention has excellent adhesion properties to metals and polar resins and has excellent solvent resistance. The modified polyolefin can be favorably used as a component of a thermoplastic resin composition or an adhesive resin composition.

## Claims

1. A modified polyolefin which is the product of graft polymerizing a polyolefin (A) comprising repeating units derived from at least one olefin selected from ethylene and α-olefins of 3 to 20 carbon atoms, with at least one alicyclic epoxy group-containing ethylenically unsaturated monomer (B) of formulae (1) to (4), the modified polyolefin comprising 0.01 to 50% by weight of units derived from alicyclic epoxy group-containing ethylenically unsaturated monomer based on the total weight of the modified polyolefin; 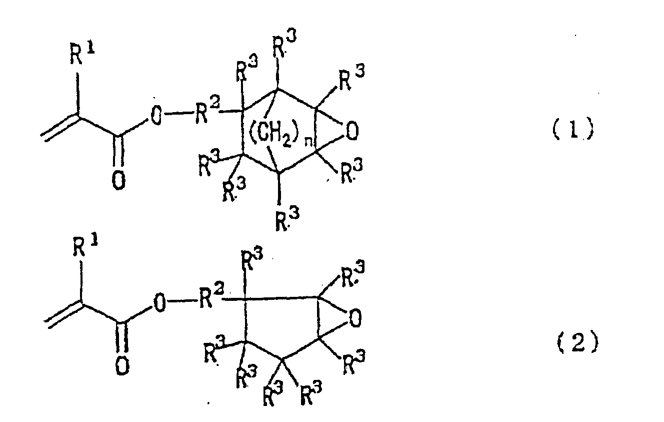 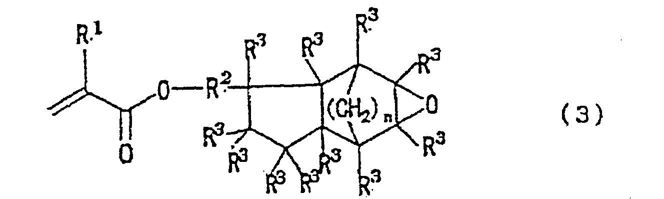 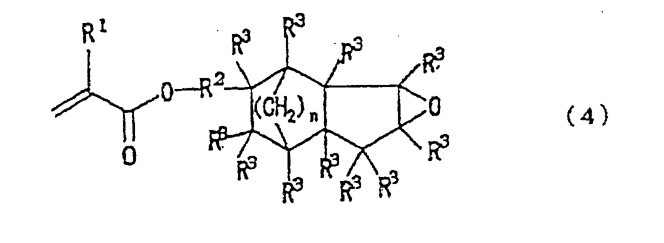 wherein R¹ is hydrogen or methyl, R² is a single bond or a divalent hydrocarbon group of 1 to 20 carbon atoms which may contain a hetero atom, R³ is hydrogen or a hydrocarbon group of 1 to 20 carbon atoms which may contain a hetero atom, n is an integer of 0 to 2, and each R³ may be the same or different.

2. A modified polyolefin which is the product of graft polymerizing a polyolefin (A) comprising repeating units derived from at least one olefin selected from ethylene and α-olefins of 3 to 20 carbon atoms, with at least one alicyclic epoxy group-containing ethylenically unsaturated monomer (B) represented by any one of the above-mentioned formulae (1) to (4) as defined in claim 1, and at least one other ethylenically unsaturated monomer (C), the modified polyolefin comprising 0.01 to 50% by weight of units derived from (B) and 0.01 to 50% by weight of units derived from (C), the total of the graft quantities of the monomer (B) and other ethylenically unsaturated monomer (C) is in the range of 0.02 to 60% by weight, weight % being based on the total weight of the modified polyolefin.

3. A modified polyolefin according to claim 1 or claim 2, wherein the polyolefin (A) is an ethylene homopolymer or an ethylene copolymer.

4. A modified polyolefin according to any one of claims 1 to 3, wherein the polyolefin (A) is an ethylene homopolymer or an ethylene copolymer having a density of not less than 0.895 g/cc.

5. A modified polyolefin according to any one of claims 2 to 4, wherein the other ethylenically unsaturated monomer (C) is an aromatic vinyl compound.

6. A thermoplastic resin composition comprising the modified polyolefin according to any one of claims 1 to 5 and a thermoplastic resin (D).

7. A thermoplastic resin composition according to claim 6, wherein the thermoplastic resin (D) is a polyolefin.

8. A composition according to claim 6 or claim 7 which is an adhesive resin.

9. Use of a composition according to any one of claims 1 to 8 as an adhesive.

10. Use of a composition according to any one of claims 1 to 8 for adhering to a metal or polar resin substrate.
